# DEMANDE DE BREVET EUROPEEN

(11) **EP 3 225 496 A1**
(43) Date de publication de la demande: **04.10.2017**
(21) Numéro de dépôt: 17162113.9
(22) Date de dépôt: 21.03.2017
(51) Int. Cl.: B61F 1/04, B60F 1/04, E02F 9/02

(54) **BRAS D'ESSIEU POUR ESSIEU FERROVIAIRE, ESSIEU FERROVIAIRE ET VEHICULE FERROVIAIRE COMPRENANT UN TEL BRAS D'ESSIEU**

(30) Priorité: 29.03.2016 FR 1652671
(71) Demandeur: UNAC, 30310 Vergeze (FR)
(72) Inventeur: LACROIX, Jerôme, 30420 Calvisson (FR); CALAMIA, Julien, 30670 AIGUES-VIVES (FR)
(74) Mandataire: Pontet Allano & Associes

(57) **Abrégé**

L'invention concerne un bras d'essieu (110) pour un essieu ferroviaire d'un véhicule ferroviaire, en particulier de type rail-route, caractérisé en ce qu'il se présente sous la forme d'une pièce monobloc réalisée par fonderie ou coulage.

Elle concerne également un essieu ferroviaire (100) muni d'un tel bras d'essieu et un véhicule ferroviaire, en particulier rail-route, comprenant un tel essieu ferroviaire (100) ou un tel bras d'essieu (110).

## Description

La présente invention concerne un bras d'essieu pour un essieu ferroviaire. Elle concerne également un essieu ferroviaire comprenant un tel bras d'essieu et un véhicule ferroviaire, en particulier de type rail-route, comprenant un tel essieu ferroviaire.

Le domaine de l'invention est le domaine des véhicules ferroviaires, en particulier des véhicules rail-route, et encore plus particulièrement des véhicules industriels ferroviaires ou rail-route, de type pelle rail-route, débroussailleur rail-route, etc.

### Etat de la technique

On connait des véhicules industriels ferroviaires, ou des véhicules industriels rail-route, conçus pour circuler sur une voie ferrée en vue par exemple d'accomplir divers travaux de voieries sur, ou en périphérie, de la voie ferrée, par exemple pour débroussailler avec une débroussailleuse ou intervenir en profondeur avec une pelleteuse.

Ces véhicules comprennent des essieux munis de roues pneumatiques pour circuler sur route, et des essieux ferroviaires munis de roues métalliques pour circuler sur la voie ferrée, de manière similaire à un train.

Dans les véhicules ferroviaires rail-route actuels, les essieux ferroviaires comprennent des bras d'essieu réalisés par assemblage de pièces métalliques mécanosoudées. Or, la réalisation d'un bras d'essieu mécanosoudé est chronophage et très coûteuse. De plus, la qualité d'un tel bras d'essieu dépend de la qualité des soudures réalisées, et nécessite un soudeur spécialisé formé à cet effet. En outre, il n'est pas possible de réaliser de manière répétable des bras d'essieu en termes de qualité et de précision.

Un but de la présente invention est de remédier à ces inconvénients.

Un autre but de l'invention est de proposer un bras d'essieu pour véhicule ferroviaire, ou pour véhicule rail-route, de fabrication moins coûteuse et moins chronophage.

Encore un autre but de l'invention est de proposer un bras d'essieu pour véhicule ferroviaire, ou véhicule rail-route, ne nécessitant pas de personne spécialisée formée à cet effet.

Il est aussi un but de l'invention de proposer un bras d'essieu pour véhicule ferroviaire, ou véhicule rail-route, de manière répétable en termes de qualité et de précision.

### Exposé de l'invention

L'invention permet d'atteindre au moins l'un de ces buts par un bras d'essieu pour un essieu ferroviaire d'un véhicule ferroviaire, en particulier un véhicule de type rail-route, caractérisé en ce qu'il se présente sous la forme d'une pièce monobloc réalisée par fonderie ou coulage.

L'invention propose donc de réaliser le bras d'essieu d'un véhicule ferroviaire, en particulier d'un véhicule rail-route, par fonderie ou par coulage. Ainsi, le bras d'essieu selon l'invention ne comporte pas de pièces mécanosoudées entre-elles. Par conséquent, le bras d'essieu selon l'invention ne nécessite pas de soudeur spécialisé formé à la réalisation de bras d'essieu, et spécifiquement habilitée pour réaliser cette opération, dont la certification est longue et coûteuse.

Par ailleurs, la réalisation d'un bras d'essieu par coulage ou fonderie est plus rapide et moins coûteuse comparée à une technique de réalisation par mécanosoudage.

En outre, une fois la pièce de fonderie mise au point, la réalisation d'un bras d'essieu par coulage ou fonderie permet d'obtenir une très grande répétabilité, en termes de qualité et de précision.

Le bras d'essieu peut être réalisé en acier.

Avantageusement, le bras d'essieu peut être réalisé en fonte.

La fonte permet d'obtenir un bras d'essieu robuste résistant aux sollicitations mécaniques, tout en étant plus flexible que l'acier par exemple. Cette flexibilité est très utile pour maintenir le véhicule ferroviaire en équilibre sur la voie ferrée, et éviter un déraillement, en particulier pour un véhicule de travaux rail-route, lors des sollicitations mécaniques dues aux travaux réalisées.

Préférentiellement, le bras d'essieu peut être réalisé en fonte à graphite sphéroïdale, qui présente une plus grande robustesse.

Avantageusement, le bras d'essieu selon l'invention peut présenter une dimension telle qu'il recouvre au moins la moitié de la longueur d'un essieu, en particulier les trois-quarts de l'essieu.

Un tel bras d'essieu permet de mieux équilibrer les charges et les sollicitations mécaniques sur l'essieu.

Suivant un mode de réalisation avantageux, le bras d'essieu peut comprendre une partie principale, prévue pour se prolonger le long d'un essieu.

Avantageusement, cette partie principale peut présenter une forme incurvée fuyant ledit essieu au niveau d'une zone centrale de ladite partie principale ou dudit essieu. Cette forme incurvée permet d'obtenir un bras d'essieu plus résistant aux sollicitations mécaniques verticales, et permet de réaliser des opérations lourdes impliquant des efforts verticaux importants.

Dans une forme de réalisation non limitative, le bras d'essieu selon l'invention peut comprendre deux jambes de liaison, sensiblement parallèles entre-elles, et chacune faisant saillie d'un côté dudit bras d'essieu.

Ces jambes de liaison peuvent être utilisé pour réaliser une fixation du bras d'essieu sur un châssis d'un véhicule ferroviaire, et en particulier d'un véhicule de travaux rail-route, au niveau de chaque côté du bras d'essieu.

La répartition des charges sur l'essieu est améliorée par rapport à une unique fixation centrale par exemple.

Le bras d'essieu selon l'invention peut comprendre, au moins une, en particulier deux, ouverture(s) de passage d'un élément de liaison d'un essieu d'un véhicule à un châssis dudit véhicule.

Dans le cas d'un véhicule rail-route, un tel élément de liaison peut être un piston permettant de déployer l'essieu ferroviaire pour circuler sur une voie ferrée, ou de rétracter l'essieu ferroviaire pour circuler sur une route.

Le bras d'essieu peut en outre comporter un emplacement pour revoir un crochet d'attelage.

Suivant un autre aspect de l'invention, il est proposé un essieu ferroviaire pour véhicule ferroviaire, en particulier de type rail-route, comprenant :
- au moins un palier, et en particulier deux paliers,
- un berceau comportant un pivot, et
- un bras d'essieu selon l'invention.

Le berceau peut être fixé au, ou à chaque, palier par des boulons ou des vis de fixation, en au moins deux zones de fixation.

Avantageusement, le bras d'essieu peut recouvrir entièrement le berceau dans le sens de la longueur dudit essieu.

En outre, le bras d'essieu peut envelopper le berceau dans le sens transversal dudit essieu.

Le bras d'essieu peut comporter une ouverture d'accès au pivot du berceau.

Dans une version préférée, le berceau peut être réalisé en une pièce monobloc par fonderie ou coulage.

Le berceau peut être réalisé en acier.

Avantageusement, le berceau peut être réalisé en fonte. Ce qui permet d'avoir un berceau qui est à la fois robuste et plus flexible.

Préférentiellement, le berceau peut être réalisé en fonte à graphite sphéroïdale, qui présente une plus grande robustesse.

Le berceau peut présenter une forme incurvée fuyant l'essieu dans une partie centrale dudit essieu, ou dudit berceau, ce qui permet d'augmenter la résistance du berceau aux sollicitations mécaniques verticales.

L'essieu selon l'invention peut en outre comprendre au niveau d'au moins une, en particulier chacune, de ses extrémités un dispositif de suspension.

Chaque dispositif de suspension peut être fixé d'une part au palier et d'autre part au bras d'essieu, maintenant ainsi le bras d'essieu et l'essieu solidaires.

Selon un autre aspect de l'invention, il est proposé un véhicule ferroviaire, en particulier un véhicule rail-route, comprenant :
- au moins un bras d'essieu selon l'invention ; ou
- au moins un essieu ferroviaire selon l'invention.

Le véhicule selon l'invention peut comprendre plusieurs, en particulier deux, essieux ferroviaires selon l'invention.

Au moins un, en particulier chaque, essieu ferroviaire peut être déplaçable entre une position rétractée dans laquelle il n'est pas utilisé et une position déployée dans laquelle il est utilisé pour rouler sur une voie ferrée.

Le véhicule selon l'invention peut en outre comprendre plusieurs, en particulier deux, essieux munis de roues pneumatiques pour circuler sur la route, lorsque les essieux ferroviaires ne sont pas utilisés.

Le véhicule selon l'invention peut, en particulier, être un véhicule rail-route pour réaliser des travaux de voirie, en particulier sur une voie ferrée ou en périphérie d'une voie ferrée.

Plus particulièrement, le véhicule selon l'invention peut être un véhicule de travaux rail-route équipé d'une pelle, d'une débroussailleuse, d'une nacelle, etc.

En particulier, le véhicule selon l'invention peut être une pelle rail-route.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1a-1c sont des représentations schématiques d'un exemple de réalisation non limitatif d'un essieu ferroviaire selon l'invention ; et
- la FIGURE 2 est une représentation schématique d'un exemple de réalisation non limitatif d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

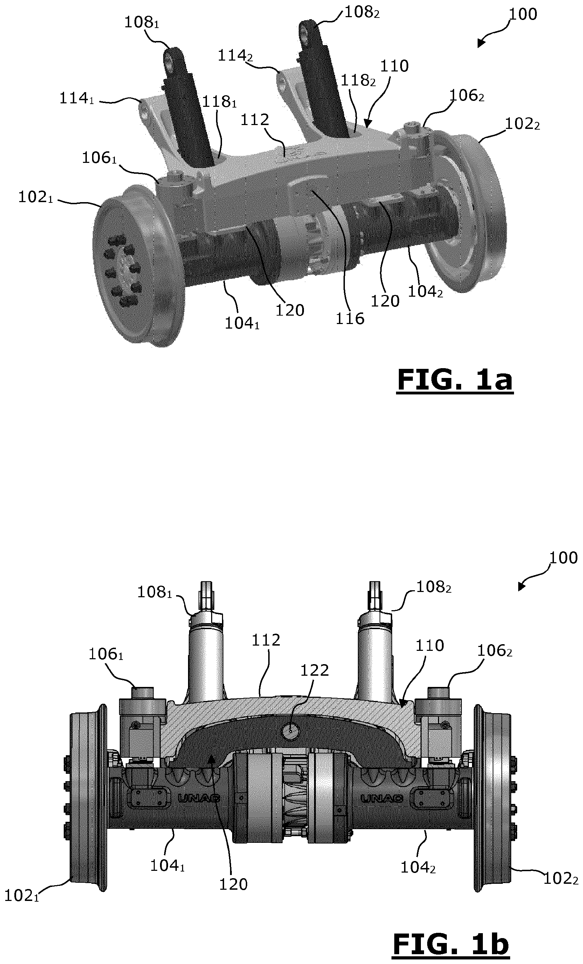

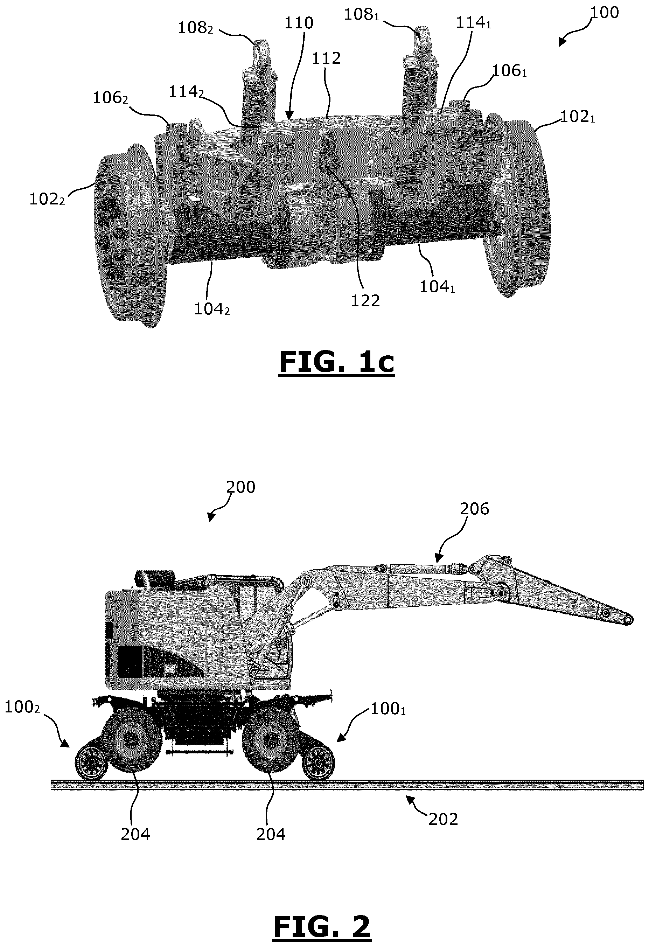

La FIGURE 1a est une représentation schématique d'un essieu ferroviaire selon l'invention selon une vue isométrique de devant. La FIGURE 1b est une représentation schématique en coupe de l'essieu de la FIGURE 1a, et la FIGURE 1c est une représentation schématique de l'essieu de la FIGURE 1a selon une vue isométrique de derrière.

L'essieu ferroviaire 100, représenté sur les FIGURES 1a-1c, permet à un véhicule ferroviaire de circuler sur une voie ferrée composée de deux files de rail.

Pour ce faire, l'essieu ferroviaire 100 comporte deux roues métalliques 102₁ et 102₂, en particulier en fer, fixées à l'essieu 100, par des boulons, au niveau de chacune des extrémités dudit essieu 100.

L'essieu 100 comporte deux paliers 104₁ et 104₂. La roue 102₁ est de trouve du côté du palier 104₁ et la roue 102₂ se trouve du côté du palier 104₂.

L'essieu 100 comporte, en outre deux suspensions 106₁ et 106₂, disposées chacune du côté d'une roue, respectivement 102₁ et 102₂, et chacune fixé à un palier, respectivement 104₁ et 104₂ par des boulons.

L'essieu 100 est fixé à un châssis d'un véhicule ferroviaire par des vérins/pistons 108₁ et 108₂, permettant de déplacer l'essieu 100 entre une position rétractée dans laquelle l'essieu 100 n'est pas utilisé et une position déployée dans laquelle l'essieu 100 est utilisé pour rouler sur une voie ferrée.

L'essieu 100 comprend en outre un bras d'essieu 110.

Le bras d'essieu 110 est réalisé en une seule pièce monobloc, par fonderie, en fonte à graphite sphéroïdale.

Le bras d'essieu 110 comprend une partie principale 112, centrée par rapport à l'essieu 100, et en particulier par rapport à l'ensemble formée par les paliers 104, et se prolongeant dans la direction définie par l'essieu 100, en particulier la direction définie par les paliers 104.

La partie principale 112 présente une forme incurvée vers l'extérieure, fuyant l'essieu, au niveau de la zone centrale de l'essieu 100. La partie principale 112 se prolonge, dans la direction définie par l'essieu 100, sur les trois quarts de la largeur totale de l'essieu 100.

La partie principale 112 vient se loger, au niveau de chacune de ses extrémités, sous un épaulement naturel prévu sur chacune des suspensions 106₁ et 106₂. De plus, la partie principale 112 du bras d'essieu 110 est fixée, au niveau de chacune de ses extrémités, à une suspension 106₁ et 106₂, par exemple par des vis ou boulons. Ainsi, chaque suspension 106 permet de maintenir le bras d'essieu 110 et l'essieu 100 solidaires entre eux.

Le bras d'essieu 110 comprend en outre deux jambes de fixation, respectivement 114₁ et 114₂, solidaire de la partie principale 112, du côté de chacune des extrémités de la partie principale 112, en particulier du côté de chacune des roues, respectivement 102₁ et 102₂. Chaque jambe de fixation 114 comporte un pivot permettant de fixer chaque jambe de fixation 114 à un châssis d'un véhicule ferroviaire de manière rotative autour d'un axe parallèle à l'essieu 100.

Le bras d'essieu 110 comporte en outre des taraudages 116 permettant de fixer un attelage audit bras d'essieu 110.

Par ailleurs, le bras d'essieu 110 comporte des ouvertures traversant 118₁ et 118₂, prévue dans chaque jambe de liaison, respectivement 114₁ et 114₂, pour laisser passer les pistons, respectivement 108₁ et 108₂.

L'essieu 100 comprend en outre un berceau 120, visible sur la FIGURE 1b.

Le berceau 120 est réalisé en une seule pièce monobloc, par fonderie, en fonte à graphite sphéroïdale.

Le berceau 120 présente une forme incurvée vers l'extérieure, fuyant l'essieu 100, au niveau de la zone centrale de l'essieu 100.

Le berceau 120 se prolonge dans la direction définie par l'essieu 100 sur sensiblement la moitié de la largeur totale de l'essieu 100.

Le berceau 120 est fixé à chacun des paliers 104₁ et 104₂ au niveau de chacune de ses extrémités par des vis de fixation.

Le berceau 120 comporte un pivot 122 lui permettant de pivoter autour d'un axe perpendiculaire/transversale à la direction définie par l'essieu 100.

Tel que représenté sur les FIGURES 1a et 1b, le bras d'essieu 110 est disposé au-dessus du berceau 120 et recouvre le berceau sur toute sa longueur (dans la direction définie par l'essieu) et sur toute sa largeur (dans la direction transversale de l'essieu).

La FIGURE 2 est une représentation schématique d'un exemple de réalisation non limitatif d'un véhicule selon l'invention.

Le véhicule 200 représenté sur la FIGURE 2, est un véhicule rail-route pour réaliser des travaux de voiries, dans ou en périphérie d'une voie ferrée 202.

Le véhicule 200 comporte deux essieux ferroviaires 100₁ et 100₂ pour circuler sur une voie ferrée 202 formée par deux files de rail. Chaque essieu 100₁ et 100₂ peut être l'essieu 100 de la FIGURE 1.

Chaque essieu ferroviaire 100 est déplaçable entre une position rétractée dans laquelle il n'est pas utilisé et une position déployée dans laquelle il est utilisé pour rouler sur la ferrée 202. Sur la FIGURE 2, les essieux 100 sont représentés dans une position déployée.

Le véhicule 200 comporte en outre deux essieux comportant des roues pneumatiques 204 pour circuler sur la route, lorsque les essieux ferroviaires 100 ne sont pas utilisés et se trouvent en position rétractée.

Le véhicule 200 comporte un bras mécanique 206 pouvant être muni d'un outil de travail, tel qu'une pelle, une tondeuse, une nacelle ou une débrousailleuse, etc.

Bien entendu, l'invention n'est pas limitée aux exemples détaillés ci-dessus.

## Revendications

1. Véhicule (200) de travaux rail-route comprenant au moins un essieu ferroviaire (100) comprenant :
- au moins un palier (104),
- un berceau (120) comportant un pivot (122), et
- un bras d'essieu (110) ;
**caractérisé en ce que** ledit bras d'essieu (110) se présente sous la forme d'une pièce monobloc réalisée par fonderie ou coulage.

2. Véhicule (200) selon la revendication précédente, **caractérisé en ce que** le bras d'essieu (110) est réalisé en fonte, en particulier en fonte à graphite sphéroïdale.

3. Véhicule (200) selon l'une quelconque des revendications précédentes, **caractérisé en ce que** le bras d'essieu (110) présente une dimension telle qu'il recouvre au moins la moitié de la longueur d'un essieu (100).

4. Véhicule (200) selon l'une quelconque des revendications précédentes, **caractérisé en ce que** le bras d'essieu (110) comporte une partie principale (112), prévue pour se prolonger le long d'un essieu (100), ladite partie principale (112) présentant une forme incurvée fuyant ledit essieu en une zone centrale de ladite partie principale (112).

5. Véhicule (200) selon l'une quelconque des revendications précédentes, **caractérisé en ce que** le bras d'essieu (110) comporte deux jambes de liaison (114) sensiblement parallèles entre-elles, et chacune faisant saillie d'un côté dudit bras d'essieu (110).

6. Véhicule (200) selon l'une quelconque des revendications précédentes, **caractérisé en ce que** le bras d'essieu (110) comporte au moins une, en particulier deux, ouverture(s) (118) de passage d'un élément de liaison (108) d'un essieu (100) du véhicule (200) à un châssis dudit véhicule (200).

7. Véhicule (200) selon l'une quelconque des revendications précédentes, **caractérisé en ce que** le bras d'essieu (110) recouvre entièrement le berceau (120) dans le sens de la longueur dudit essieu (100).

8. Véhicule (200) selon l'une quelconque des revendications précédentes, **caractérisé en ce que** le bras d'essieu (110) enveloppe le berceau (120) dans le sens transversal dudit essieu (100).

9. Véhicule (200) selon l'une quelconque des revendications précédentes, **caractérisé en ce que** le berceau (120) est réalisé en une pièce monobloc par fonderie ou coulage.

10. Véhicule (200) selon l'une quelconque des revendications précédentes, **caractérisé en ce que** le berceau (120) présente une forme incurvée fuyant ledit essieu (100) dans une zone centrale dudit essieu (100).

11. Véhicule (200) selon l'une quelconque des revendications précédentes, **caractérisé en ce qu'**il comprend au niveau d'au moins une, en particulier chacune, de ses extrémités un dispositif (106) de suspension fixé d'une part au palier (104) et d'autre part au bras d'essieu (110).
